# FASCICULE DE BREVET EUROPEEN

(11) **EP 0 386 612 B1**
(45) Date de publication et mention de la délivrance du brevet: **08.09.1993**
(21) Numéro de dépôt: 90103937.0
(22) Date de dépôt: 01.03.1990
(51) Int. Cl.: A47J 19/02

(54) **Panier de centrifugeuse**
Zentrifugenkorb
Centrifuge bowl

(30) Priorité: 07.03.1989 FR 8902983
(43) Date de publication de la demande: 12.09.1990
(73) Titulaire: MOULINEX, F-93170 Bagnolet (FR)
(72) Inventeur: Basora San Juan, Antonio, c/o Moulinex Espana, E-Barcelona 21 (ES)
(74) Mandataire: May, Hans Ulrich, Dr.

(56) Documents cités:
- CH-A- 377 063
- CH-A- 434 598
- DE-B- 1 093 961
- FR-A- 2 514 629

## Description

L'invention se rapporte aux centrifugeuses à usage domestique, utilisées pour extraire le jus des fruits, des légumes ou analogue, et comportant un moteur entraînant en rotation un panier à l'intérieur d'un récipient.

L'invention se rapporte plus particulièrement à un panier de centrifugeuse comprenant un tamis perforé ayant une surface de révolution à axe vertical, une bordure supérieure ainsi qu'une barye inférieure adaptée à venir s'accoupler en rotation avec un entraîneur solidaire d'un arbre moteur.

Dans les centrifugeuses connues, pour éviter que le panier ne se soulève à l'intérieur du récipient à cause de sa vitesse de rotation élevée (environ 12000 Tours/mn), on a recours à différentes solutions mécaniques pour maintenir l'accouplement entre l'entraîneur et le panier. Par exemple dans certains cas, un couvercle de fermeture du récipient appuie, par l'intermédiaire d'un doigt interne, sur le fond du panier, ce qui présente l'inconvénient d'avoir une trémie d'alimentation dont l'ouverture dans le couvercle est trop étroite pour introduire de gros morceaux d'aliments. Une telle centifugeuse a été décrite dans la demande de brevet français N° 2.182.795 . Dans d'autres cas, le panier est vissé sur l'entraîneur, ce qui présente l'inconvénient de requérir une certaine force au dévissage.

La présente invention a pour but de remédier à ces inconvénients, et elle a pour objet de réaliser un panier amovible de centrifugeuse qui ne se soulève pas pendant la rotation à vitesse élevée.

Selon l'invention la bordure supérieure comporte des moyens d'appui dynamique, exerçant pendant la rotation du panier une force d'appui orientée vers le bas, et contribuant à maintenir l'accouplement entre la bague inférieure et l'entraîneur.

La présente invention a donc pour avantage d'utiliser la vitesse de rotation pour empêcher le panier de se soulever grâce à l'action de l'air sur les moyens d'appui dynamique, rendant ainsi automatique la coopération entre le panier et l'entraîneur. De plus ce dispositif étant très simple, il a l'avantage d'être d'un coût réduit et susceptible d'être fabriqué en grande série, les moyens d'appui dynamique et d'accouplement étant obtenus par simple moulage de pièces plastiques.

Les caractéristiques et avantages de l'invention ressortiront d'ailleurs de la description détaillée qui va suivre, à titre d'exemple, en référence au dessin annexé dans lequel :

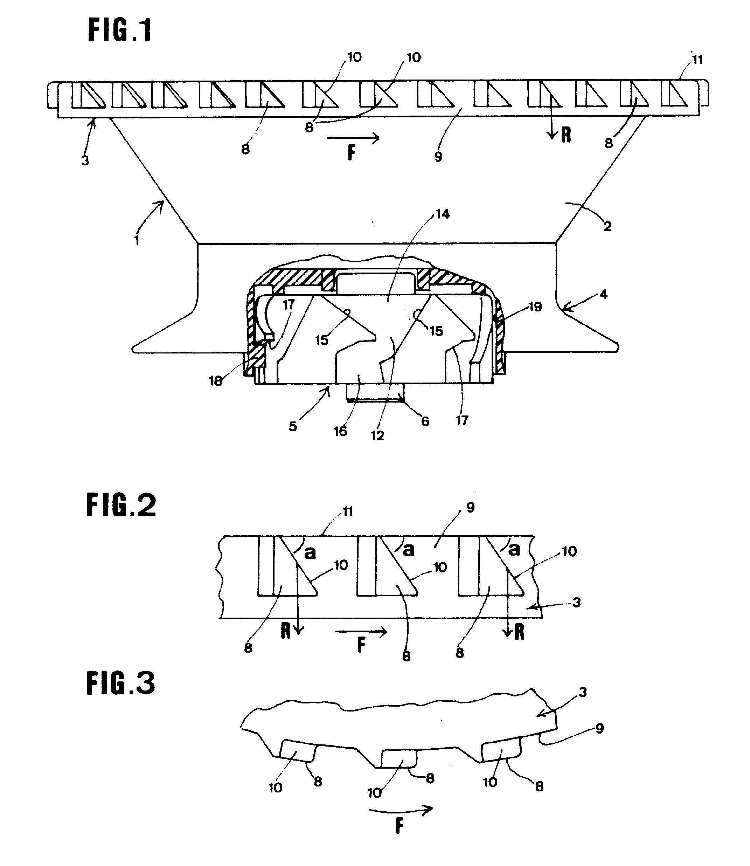

la figure 1 est une vue en élévation du panier selon l'invention avec une coupe partielle illustrant le moyen d'accouplement du panier avec l'entraîneur; la figure 2 est une vue partielle à plus grande échelle en élévation de la bordure supérieure illustrant les moyens d'appui dynamique; la figure 3 est une vue de dessus de la figure 2.

Le panier de centrifugeuse 1 représenté à la figure 1 comprend un tamis 2 perforé ayant une surface de révolution tronconique à axe vertical, une bordure supérieure 3 ainsi qu'une bague inférieure 4 adaptée à venir s'accoupler en rotation avec un entraîneur 5 solidaire d'un arbre moteur 6.

Selon l'invention, la bordure supérieure 3 comporte des moyens d'appui dynamique, exerçant pendant la rotation du panier une force d'appui R orientée vers le bas, et contribuant à maintenir l'accouplement entre la bague inférieure 4 et l'entraîneur 5.

Ainsi lors de la rotation du panier 1, l'air oppose au mouvement de rotation (flèche F) une force de résistance proportionnelle à la vitesse de rotation. Cette force de résistance s'applique horizontalement dans le sens inverse de la rotation sur les moyens d'appui dynamique, lesdits moyens étant construits de telle sorte que la force résultante R dite d'appui soit orientée vers le bas.

Les moyens d'appui dynamique sont avantageusement constitués par une pluralité d'ailettes 8 agencées régulièrement sur la surface périphérique 9 de la bordure supérieure 3 qui présentent chacune une face active 10 tournée à la fois vers le haut et vers le sens de rotation F du panier.

La face active 10 des ailettes 8 (figures 2 et 3) est un plan incliné et l'angle a que forme ledit plan 10 avec le bord supérieur 11 de la bordure 3 est d'environ 55°, l'angle a étant calculé de façon que la force d'appui R maintienne l'accouplement entre la bague inférieure 4 et l'entraîneur 5.

Selon une caractéristique avantageuse de l'invention, les moyens d'accouplement (figure 1) entre l'entraîneur 5 et la bague inférieure 4 sont constitués respectivement par des gorges 12 qui sont pratiquées sur la surface périphérique de l'entraîneur 5, et dont chacune présente une entrée 14 formant rampe 15 d'introduction ainsi qu'un fond 16 formant un crochet 17 qui s'ouvre dans le sens de rotation F, et par des doigts 18 agencés sur la périphérie interne 19 de la bague 4 et susceptibles de venir se loger sous les crochets 17.

Ainsi, à la mise en place du panier 1 sur l'entraîneur 5, chaque doigt 18 est mis en correspondance avec une entrée 14 de gorge 12, puis est guidé automatiquement vers le bas par les rampes 15, et, par légère rotation du panier 1 par rapport à l'entraîneur 5 dans le sens inverse du sens de rotation, chaque doigt 18 pénètre alors dans le fond 16 de la gorge 12, se positionnant sous le crochet 17.

Pendant la rotation, la force d'appui R, appliquant chaque doigt 18 au fond 16 d'une gorge 12, maintient le panier 1 et l'empêche de se soulever.

A l'arrêt, il suffit de soulever le panier 1 avec une légère rotation par rapport à l'entraîneur 5 dans le sens de rotation F, de façon à dégager les doigts 18 des crochets 17, puis à leur faire remonter la gorge 12, désaccouplant ainsi facilement le panier 1 et l'entraîneur 5.

## Revendications

1. Panier de centrifugeuse (1) comprenant un tamis perforé (2) ayant une surface de révolution à axe vertical, une bordure supérieure (3) ainsi qu'une bague inférieure (4) adaptée à venir s'accoupler en rotation avec un entraîneur (5) solidaire d'un arbre moteur (6),
**caractérisé en ce que** la bordure supérieure (3) comporte des moyens d'appui dynamique présentant chacun une face active (10) tournée à la fois vers le haut et vers le sens de rotation (F) du panier et exerçant pendant la rotation du panier (1) une force d'appui (R) orientée vers le bas, et contribuant à maintenir l'accouplement entre la bague inférieure (4) et l'entraîneur (5).

2. Panier de centrifugeuse selon la revendication 1,
**caractérisé en ce que** les moyens d'appui dynamique sont constitués par des ailettes (8) agencées sur la surface périphérique (9) de la bordure supérieure (3) .

3. Panier de centrifugeuse selon la revendication 2,
**caractérisé en ce que** la face active (10) des ailettes (8) est un plan incliné et l'angle (a) que forme ledit plan (10) avec le bord supérieur (11) de la bordure (3) est d'environ 55°.

4. Panier de centrifugeuse selon l'une quelconque des revendications précédentes,
**caractérisé en ce que** les moyens d'accouplement entre l'entraîneur (5) et la bague inférieure (4) sont constitués respectivement par des gorges (12) qui sont pratiquées sur la surface périphérique de l'entraîneur (5), et dont chacune présente une entrée (14) formant rampe d'introduction (15) ainsi qu'un fond (16) formant un crochet (17) qui s'ouvre dans le sens de rotation (F), et par des doigts (18) agencés sur la périphérie interne (19) de la bague (4) et susceptibles de venir se loger sous les crochets (17).

## Patentansprüche

1. Zentrifugenkorb (1), der ein perforiertes Sieb (2) mit einer Drehfläche mit vertikaler Achse, eine obere Randleiste (3) sowie einen unteren Ring (4), der zur Kupplung bei der Drehung mit einem mit einer Motorwelle (6) verbundenen Antriebselement (5) eingerichtet ist, aufweist, **dadurch gekennzeichnet,** daß die obere Randleiste (3) eine dynamische Andruck-Vorrichtung mit Wirkflächen (10) aufweist, die jede gleichzeitig nach oben und in der Drehrichtung F des Korbes gerichtet sind und während der Drehung des Korbes (1) eine nach unten gerichtete Andruckkraft (R) ausüben und zur Aufrechterhaltung der Kupplung zwischen dem unteren Ring (4) und dem Antriebselement (5) beitragen.

2. Zentrifugenkorb nach Anspruch 1, **dadurch gekennzeichnet,** daß die dynamische Andruck-Vorrichtung aus an der Umfangsfläche (9) der oberen Randleiste (3) ausgebildeten Flügeln (8) besteht.

3. Zentrifugenkorb nach Anspruch 2, **dadurch gekennzeichnet,** daß die Wirkfläche (10) der Flügel (7) eine schräge Ebene ist und der von dieser Ebene (10) mit der Oberkante (11) der Randleiste (3) gebildete Winkel (a) etwa 55° beträgt.

4. Zentrifugenkorb nach einem der vorangehenden Ansprüche, **dadurch gekennzeichnet,** daß die Kupplungsvorrichtung zwischen dem Antriebselement (5) und dem unteren Ring (4) aus Nuten (12), die in der Umfangsfläche des Antriebselements (5) ausgebildet sind und die jeweils eine Eintrittsöffnung (14), die eine Einlaßrampe (15) bildet, sowie einen Boden (16), der einen sich in der Drehrichtung (F) öffnenden Haken (17) bildet,aufweisen, sowie aus am inneren Umfang (19) des Ringes (4) ausgebildeten Fingern (18), die ihren Platz unter den Haken (17) finden, besteht.

## Claims

1. A basket centrifuge (1) comprising a perforated sieve (2) having a revolving surface with a vertical axis, an upper border (3) and also a lower ring (4), adapted to become coupled during rotation with a drive unit (5) integral with a driving shaft (6),
**characterised in that** the upper border (3) comprises dynamic support means each having an active face (10) turned simultaneously upwards and in the direction of rotation (F) of the basket and during the rotation of the basket (1) exerting a downwardly directed bearing force (R), and contributing towards maintaining the coupling between the lower ring (4) and the drive unit (5).

2. A basket centrifuge according to Claim 1,
**characterised in that** the dynamic support means are formed by fins (8) disposed on the peripheral surface (9) of the upper border (3).

3. A basket centrifuge according to Claim 2,
**characterised in that** the active face (10) of the fins (8) is an inclined plane and the angle (a) formed by said plane (10) with the upper edge (11) of the border (3) is roughly 55°.

4. A basket centrifuge according to any one of the preceding Claims,
**characterised in that** the coupling means between the drive unit (5) and the lower ring (4) are formed respectively by recesses (12) which are made on the peripheral surface of the drive unit (5), and each of which has an opening (14) forming an admission ramp (15) and also a base (16) forming a hook (17) which opens in the direction of rotation (F), and by tappets (18) disposed over the internal periphery (19) of the ring (4) and capable of becoming lodged beneath the hooks (17).
